# EUROPÄISCHE PATENTSCHRIFT

(11) **EP 1 611 380 B1**
(45) Veröffentlichungstag und Bekanntmachung des Hinweises auf die Patenterteilung: **05.07.2006**
(21) Anmeldenummer: 04723971.0
(22) Anmeldetag: 29.03.2004
(51) Int. Cl.: F16J 15/32

(54) **DICHTUNGSANORDNUNG**
SEALING ARRANGEMENT
ENSEMBLE JOINT

(30) Priorität: 31.03.2003 DE 10314533
(43) Veröffentlichungstag der Anmeldung: 04.01.2006
(73) Patentinhaber: Busak + Shamban Deutschland GmbH, 70565 Stuttgart (DE)
(72) Erfinder: PETER, Jörg, 71101 Schönaich (DE); POETHIG, Rolf, 71088 Holzgerlingen (DE); FRENZEL, Ulrich, 70839 Gerlingen (DE); ADOLF, Jean-Jacques, 01170 Cessy (FR); JORDAN, Holger, 73765 Neuhausen a.d.F. (DE); CATENI, Gianfranco, I-57125 Livorno (IT); SCALTRITI, Doriano, I-42010 Rio Saliceto (IT)
(74) Vertreter: Kohler Schmid Möbus
(86) Internationale Anmeldenummer: PCT/DE2004/000647
(87) Internationale Veröffentlichungsnummer: WO 2004/088182

(56) Entgegenhaltungen:
- EP-A- 1 162 394
- DE-A- 3 606 011
- DE-A- 19 505 012
- DE-A- 19 714 844
- DE-U- 9 421 933
- DE-U- 29 715 911
- PATENT ABSTRACTS OF JAPAN Bd. 1999, Nr. 09, 30. Juli 1999 (1999-07-30) & JP 11 101349 A (TOKICO LTD), 13. April 1999 (1999-04-13)

## Beschreibung

Die Erfindung betrifft eine Dichtungsanordnung für hydraulische Kolben oder Kolbenstangen, mit einem Nutring aus einem zähelastischen Kunststoff, einem ruhenden Maschinenteil und einem beweglichen Maschinenteil mit einem Außenradius R, wobei der Nutring als Berührungsdichtung zwischen dem ruhenden Maschinenteil und dem beweglichen Maschinenteil unter radialer Vorspannung in einem profilierten Abschnitt des ruhenden Maschinenteils angeordnet ist, wobei der Nutring hochdruckseitig eine radial äußere und eine radial innere Dichtlippe aufweist, wobei das ruhende und das bewegliche Maschinenteil niederdruckseitig durch einen Dichtspalt der Dichtspaltbreite B beabstandet sind, wobei der Nutring niederdruckseitig mit einer Anlagefläche an einem radial orientierten Bereich des profilierten Abschnitts anliegt, und wobei der Nutring einen Innenradius und einen Außenradius aufweist.

Gattungsgemäße Dichtungsanordnungen mit Nutringen sind beispielsweise durch H. K. Müller, Abdichtung bewegter Maschinenteile, Medienverlag Ursula Müller, Waiblingen 1990, Seite 162 ff, bekannt geworden bzw. aus der Druckschrift EP-A-1 162 394.

Soll ein translatorisch bewegliches Maschinenteil, etwa eine Kolbenstange, in einem ruhenden Maschinenteil hydraulisch bewegt werden, so ist es notwendig, die kraftübertragende Hydraulikflüssigkeit, etwa ein Öl, am Austritt zu hindern. Dazu werden Nutring-Stangendichtungen eingesetzt.

Ein Nutring nach dem Stand der Technik besteht im wesentlichen aus einem Grundkörper mit quaderförmigem Querschnitt und zwei hochdruckseitigen Dichtlippen. Der Nutring liegt fest in einer Nut des ruhenden Maschinenteils, wobei die Nut in aller Regel einen rechteckförmigem Querschnitt aufweist. Aus einem Zwischenraum zwischen beweglichem und ruhendem Maschinenteil kann von der Hochdruckseite her Hydraulikflüssigkeit in den Nutraum eindringen. Der Nutring liegt zumindest mit seiner radial äußeren Dichtlippe am Nutgrund und zumindest mit seiner radial inneren Dichtlippe am beweglichen Maschinenteil auf, wodurch der Nutraum unterteilt wird und eine Ausbreitung der Hydraulikflüssigkeit in den niederdruckseitigen Teil des Nutraums vermieden wird.

Während einer Druckbeaufschlagung der Hydraulikflüssigkeit erfährt der Nutring äußere Kräfte, die ihn verstärkt an die Nutwandungen und das bewegliche Maschinenteil pressen, wodurch die Dichtwirkung des Nutrings gesteigert wird. Der Nutring wird dabei allerdings auch verformt. Diese Verformungen können zu einer Beschädigung des Nutrings führen, etwa durch Abrieb von Nutringmaterial.

Zwischen dem beweglichen und dem ruhenden Maschinenteil ist auch auf der Niederdruckseite ein Abstand, ein sogenannter Dichtspalt, vorgesehen. Es ist nicht auszuschließen, dass herkömmliche Nutringe möglicherweise bei Verformungen durch Druckbeaufschlagung teilweise in den Dichtspalt gepresst werden, wodurch die Nutringe schnell verschleißen.

Aufgabe der vorliegenden Erfindung ist es demgegenüber, eine Dichtungsanordnung auf Basis einer Nutring-Stangendichtung vorzustellen, die eine verbesserte Verschleißbeständigkeit aufweist.

Erfindungsgemäß wird diese Aufgabe bei einer eingangs vorgestellten Dichtungsanordnung dadurch gelöst, dass sowohl im drucklosen Zustand als auch im druckbeaufschlagten Zustand der Innenradius des Nutrings im Bereich der Anlagefläche größer ist als die Summe von R und B.

Bei der erfindungsgemäßen Dichtungsanordnung besteht in allen Druckzuständen ein Abstand zwischen dem nutzugewandten Ende des Dichtungsspaltes und einer dem Dichtspalt zugewandten Außenkante des Nutrings. Auch bei Druckbeaufschlagung bis 400 bar bleibt der Nutring vollständig in der Nut (=profilierter Bereich des ruhenden Maschinenteils) und wird nicht in den Dichtungsspalt extrudiert. Im Querschnitt bleibt also stets ein Freiraum zwischen dem radial orientierten Bereich des profilierten Abschnitts (d.h. der senkrecht zur Nutringachse verlaufenden niederdruckseitigen Nutwand), dem beweglichen Maschinenteil und dem Nutring. Durch die erfindungsgemäße Lehre wird ein Abrieb zwischen dem Nutring und den Kanten des Dichtspaltes vermieden, wodurch der vorzeitige Verschleiß des Nutrings stark vermindert wird.

Die Dichtspaltbreite B wird am Übergang des Dichtspalts zum profilierten Abschnitt des ruhenden Maschinenteils auf der Niederdruckseite N bestimmt.

Besonders bevorzugt wird eine Ausführungsform der erfindungsgemäßen Dichtungsanordnung, bei der sich im drucklosen Zustand der Innenradius des Nutrings von der Niederdruckseite N zur inneren Dichtlippe hin in einem Bereich um die Anlagefläche verkleinert, insbesondere stetig verkleinert. Mit von der Anlagefläche aus lokal zunehmender achsialer Entfernung vom Dichtspalt wird der Nutring dem beweglichen Maschinenteil angenähert, um einen möglichst massiven und damit stabilen Nutring zu gewährleisten. Ein stetiger Verlauf vermeidet Spannungsspitzen im Nutring bei Druckbeaufschlagung, die zu Beschädigungen des Nutrings durch Risse oder plastische Verformung führen können.

Eine Weiterbildung dieser Ausführungsform sieht vor, dass sich im drucklosen Zustand der Innenradius des Nutrings von der Niederdruckseite zur inneren Dichtlippe hin in einem Bereich von der Anlagefläche bis zur inneren Dichtlippe stetig verkleinert, insbesondere konusförmig. Dies schafft zusätzlichen Freiraum für die Verformung des Nutrings unter Druckbeaufschlagung. Dadurch wird ein frühzeitiges Anpressen des Nutrings an den beweglichen Maschinenabschnitt, welches Reibung verursachen würde, vermieden.

Eine andere, bevorzugte Ausführungsform sieht vor, dass im drucklosen Zustand eine Außenkante des Nutrings in einem dem Dichtspalt zugewandten Bereich konvex, insbesondere kreisbogenförmig ausgebildet ist. Dadurch wird das Rückschleppen von Hydraulikflüssigkeit in den Hochdruckbereich verstärkt.

Bevorzugt ist weiterhin eine Ausführungsform der erfindungsgemäßen Dichtungsanordnung, bei der der Nutring eine dem beweglichen Maschinenteil abgewandte Außenfläche aufweist, die im drucklosen Zustand konkav gekrümmt ist. Dadurch wird Expansionsraum für den Nutring auf den Nutgrund zu während der Druckbeaufschlagung geschaffen. So wird ein frühzeitiges Anpressen des Nutrings an den beweglichen Maschinenabschnitt, welches Reibung verursachen würde, vermieden.

Weiterhin vorteilhaft ist eine Ausführungsform, bei der sich im drucklosen Zustand der Außenradius des Nutrings von der Niederdruckseite N zur äußeren Dichtlippe hin in einem Bereich um die Anlagefläche vergrößert, insbesondere stetig vergrößert. Dadurch wird ein Freiraum zwischen dem niederdruckseitigen radial orientierten Bereich des profilierten Abschnitts, dem Nutgrund und der Außenkante des Nutrings geschaffen, der bei Druckbeaufschlagung als Expansionsraum für den Nutring dient. Auch dadurch wird ein frühzeitiges Anpressen des Nutrings an den beweglichen Maschinenabschnitt, welches Reibung verursachen würde, vermieden.

Eine andere, vorteilhafte Ausführungsform sieht vor, dass der Nutring eine dem beweglichen Maschinenteil abgewandte Außenfläche aufweist, und dass im drucklosen Zustand eine Außenkante des Nutrings im Übergangsbereich von Anlagefläche und Außenfläche konvex, insbesondere kreisbogenförmig, ausgebildet ist. Die konvexe form vermeidet Spannungsspitzen bei der Ausformung des Nutrings, insbesondere bei dessen Anlage an die Nutwände.

Besonders bevorzugt ist eine Ausführungsform der erfindungsgemäßen Dichtungsanordnung, die dadurch gekennzeichnet ist, dass der Nutring eine dem beweglichen Maschinenteil zugewandte Innenfläche aufweist, dass die Innenfläche mehrere Schmiertaschen aufweist, die als Ausnehmungen in der Innenfläche des Nutrings ausgebildet sind, und dass die radiale Tiefe der Ausnehmungen von der Niederdruckseite des Nutrings zur inneren Dichtlippe hin abnimmt. In Folge der Relativbewegung von bewegtem und ruhendem Maschinenteil werden geringe Mengen an Hydraulikflüssigkeit aus dem Hochdruckbereich in den Niederdruckbereich ausgeschleppt. Durch die Ausnehmungen an der Innenfläche wird eine verbesserte Rückschleppung von Hydraulikflüssigkeit in den Hochdruckbereich und damit eine verringerte Leckrate erreicht.

Schließlich ist bei einer vorteilhaften Ausführungsform vorgesehen, dass der Nutring eine dem beweglichen Maschinenteil zugewandte Innenfläche aufweist, und dass die Innenfläche Mikrostrukturen, insbesondere Kugelkalotten, aufweist. Dadurch wird die Rückschleppfähigkeit für Hydrauliköl verbessert und ein flächiges Anlegen des Nutrings am beweglichen Maschinenteil verhindert.

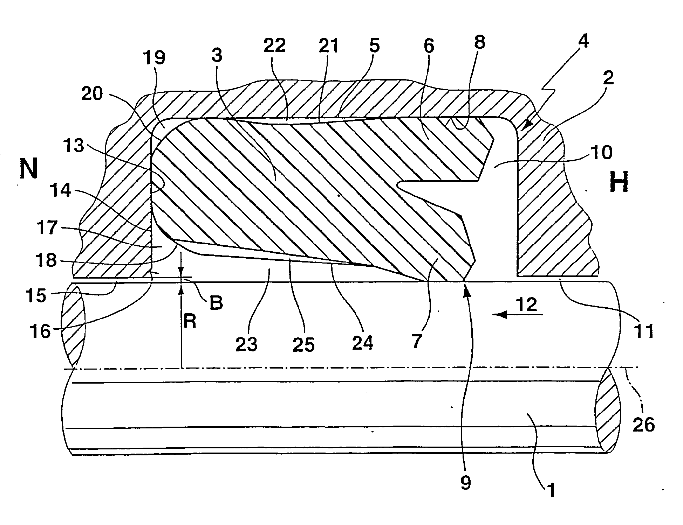

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigt die einzige Figur
einen schematischen Querschnitt einer Ausführungsform der erfindungsgemäßen Dichtanordnung.

In der Figur dargestellt ist ein Querschnitt einer Ausführungsform einer erfindungsgemäßen Dichtanordnung im drucklosen (d.h. weitgehend deformationsfreien) Zustand, mit einem beweglichen Maschinenteil 1, das hier als zylinderförmige Kolbenstange ausgeführt ist, mit einem ruhenden Maschinenteil 2 und einem Nutring 3. Zum Nutring 3 gehört eine Achse 26, bezüglich der der Nutring 3 näherungsweise rotationssymmetrisch ist; die Achse 26 fällt mit der Zylinderachse des beweglichen Maschinenteils 1 zusammen. Das ruhende Maschinenbauteil 2 weist einen profilierten Abschnitt auf, der als im Querschnitt rechteckförmige Nut 4 ausgeführt ist. Der Nutring 3 ist in der Nut 4 angeordnet, wobei aufgrund von radialer Vorspannung, d.h. von Druck des Nutrings 3 gegen einen Nutgrund 5, eine Gleitbewegung des Nutrings 3 in der Nut 4 aufgrund von Haftreibung ausgeschlossen ist. Der Nutring 3 ist aus einem zähelastischen Kunststoff, etwa Polyurethan, gefertigt.

Der Nutring 3 weist hochdruckseitig (Hochdruckseite H, in der Figur rechts) eine radial äußere Dichtlippe 6 und eine radial innere Dichtlippe 7 auf. Die äußere Dichtlippe 6 drückt dabei im Bereich 8 auf den Nutgrund 5. Die innere Dichtlippe 7 drückt,insbesondere mit der Dichtkante 9, auf das bewegliche Maschinenteil 1. Dadurch wird ein hochdruckseitiger Teil 10 der Nut 4 vom übrigen Teil der Nut 4 abgetrennt. Der hochdruckseitige Teil 10 ist mit einer Hydraulikflüssigkeit befüllt, welche durch einen Nutzspalt 11 in den hochdruckseitigen Teil 10 der Nut 4 einströmen kann. Mit der Hydraulikflüssigkeit wird auf der Hochdruckseite H ein Druck zwischen 0 und 400 bar aufgebracht. Dieser Druck kann das bewegliche Maschinenteil 1 in Pfeilrichtung 12 verschieben. Gleichzeitig liegt der Druck der Hydraulikflüssigkeit auch an den Außenkanten des Nutrings 3, die dem hochdruckseitigen Teil 10 der Nut 4 zugewandt sind, an, wodurch der Nutring 3 verformt werden kann.

Niederdruckseitig (Niederdruckseite N, in der Figur links) bei Atmosphärendruck liegt der Nutring 3 mit einer Anlagefläche 13 an einem radial orientierten Bereich 14 der Nut 4 an. Der radial orientierte Bereich 14 ist hier eine Seitenwand der Nut 4. Die Anlagefläche 13 bedeckt dabei aber nur einen mittleren Teil des radial orientierten Bereichs 14.

Niederdruckseitig sind das bewegliche Maschinenteil 1 und das ruhende Maschinenteil 2 durch einen Dichtspalt 15 beabstandet. Dem Dichtspalt 15 wird eine Dichtspaltbreite B zugeordnet, die den Abstand zwischen dem beweglichen und dem ruhenden Maschinenteil bezeichnet. Zusätzlich zur Dichtspaltbreite B ist in der Figur die Kante an der niederdruckseitigen Nutflanke gebrochen, angephast. Deshalb ergibt sich eine Durchgangsöffnung 16 in der Nut 4, welche zum Dichtspalt 15 führt. Man beachte, dass die Durchgangsöffnung 16 tatsächlich in drei Dimensionen ein ringförmiger Spalt ist.

Ist der Dichtspalt 15 an seiner Mündung in der Nut 4 über eine Durchgangsöffnung 16 erweitert, so ist der erfindungsgemäße Nutring 3 bevorzugt derart ausgelegt, dass er im drucklosen wie auch im druckbeaufschlagten Zustand einen größeren Innenradius im Bereich der Anlagefläche 13 aufweist als die Summe von R und B sowie der Vergrößerung, die durch die Durchgangsöffnung 16 erzeugt wird. Die Vergrößerung ist die radiale Erstreckung der Schrägfläche von der Durchgangsöffnung 16.

Erfindungsgemäß wird die Durchgangsöffnung 16 weder im gezeigten drucklosen Zustand, noch im druckbeaufschlagten Zustand bei verformtem Nutring 3 vom Nutring 3 überdeckt, insbesondere auch nicht teilweise. Die Unterkante des Nutrings 3 im Bereich der Anlage an den radial orientierten Bereich 14, d.h. die radial innere Kante der Anlagefläche 13, liegt radial weiter außen (oben in der Figur) als die radial außen liegende Kante der Durchgangsöffnung 16. Anders ausgedrückt ist der Innenradius des Nutrings 4 im Bereich der Anlagefläche 13 größer als die Summe des Außenradius R des beweglichen Maschinenteils 1 und der Dichtspaltbreite B zuzüglich der Vergrößerung. Es bleibt ein Freiraum 17 zwischen der dem Dichtspalt 15 zugewandten Außenkante 18 des Nutrings 3 und der Durchgangsöffnung 16. Die Außenkante 18 des Nutrings 4 ist kreisbogenförmig ausgeführt. Durch den Freiraum 17 wird eine Auswölbung des Nutrings 3 in die Durchgangsöffnung 16 oder gar tiefer in den Dichtspalt 15 bei dem vorgesehenen Maximaldruck von ca. 400 bar vermieden, was den Verschleiß bzw. eine Beschädigung am Nutring 3 verringert.

Im drucklosen Zustand ist ein weiterer Freiraum 19 im Übergangsbereich von radial orientiertem Bereich 14 der Nut 4 und dem Nutgrund 5 gegenüber einer gegenüberliegenden Außenkante 20 des Nutrings 3 vorgesehen. Die Außenkante 20 ist gegenüber den Nutwänden zurückgesetzt, um einen Expansionsraum im Falle der Druckbeaufschlagung zur Verfügung zu stellen. Die Expansion des Nutrings 3 in diesen Freiraum 19 ist vorteilhaft, da dadurch der Druck des Nutrings 3 auf das bewegliche Maschinenteil 1 nahe der Niederdruckseite N verringert wird und damit Reibung im Falle einer ausfahrenden Stange (=das bewegliche Maschinenteil 1 bewegt sich in Pfeilrichtung 12) verringert wird. Die Außenkante 20 des Nutrings 3 ist kreisbogenförmig gekrümmt.

Eine dem Nutgrund 5 zugewandte Außenfläche 21 des Nutrings 3 besitzt eine konkave Krümmung, durch die ebenfalls ein Freiraum 22 zwischen der Außenfläche 21 des Nutrings 3 und dem Nutgrund 5 entsteht.

Ein weiterer Freiraum 23 ist durch einen konischen Verlauf einer dem beweglichen Maschinenteil 1 zugewandten Innenfläche 24 des Nutrings 3 vorgesehen. Dieser Freiraum 23 dient einerseits als Expansionsraum für den Nutring 3 zur Verringerung von Druck auf das bewegliche Maschinenteil 1, zum anderen geht der Freiraum 23 auch in den Freiraum 17 über und schützt so den Nutring 3 vor einem Eindringen (Extrusion) in die Durchgangsöffnung 16.

Wird das bewegliche Maschinenteil 1 entgegen Pfeilrichtung 12 verfahren, so soll auf der Oberfläche des beweglichen Maschinenteils 1 befindliche Hydraulikflüssigkeit vom Niederdruckbereich in den Hochdruckbereich eingeschleppt werden. Zur Förderung eines solchen Verhaltens weist die Innenfläche 24 des Nutrings 3 Ausnehmungen 25 als Schmiertaschen auf, die in regelmäßigen Abständen entlang des inneren Umfangs des Nutrings 3 angeordnet sind. Diese Ausnehmungen 25 besitzen in Richtung auf die Hochdruckseite H hin abnehmende Tiefen. Ebenso können an der Innenfläche 24 Mikrostrukturen, wie Kugelkalotten, angeordnet sein, die das Gleitverhalten des Nutrings 3 auf dem beweglichen Maschinenteil 1 verbessern.

Bei einer Nutring-Stangendichtung ist der Grundkörper des Nutrings 3 gegenüber einer rechteckigen Querschnittsform im Bereich einer radial inneren, niederdruckseitigen Außenkante 18 zurückgesetzt, um einen Freiraum 17 zwischen dem Nutring 3 und der Mündung, d.h. der Durchgangsöffnung 16 eines Dichtspalts 15 in eine den Nutring 3 führende rechteckförmige Nut 4 zu erhalten. Dieser Freiraum 17 bleibt auch bei Druckbeaufschlagung zumindest teilweise erhalten, so dass der Nutring 3 bei Druckbeaufschlagung vollständig in der Nut 4 verbleibt und nicht in den Dichtspalt 15 extrudiert wird. Dadurch kann der Verschleiß bzw. Defekte am Nutring 3 erheblich reduziert werden.

## Patentansprüche

1. Dichtungsanordnung für hydraulische Kolben oder Kolbenstangen, mit einem Nutring (3) aus einem zähelastischen Kunststoff, einem ruhenden Maschinenteil (2) und einem beweglichen Maschinenteil (1) mit einem Außenradius R,
wobei der Nutring (3) als Berührungsdichtung zwischen dem ruhenden Maschinenteil (2) und dem beweglichen Maschinenteil (1) unter radialer Vorspannung in einem profilierten Abschnitt des ruhenden Maschinenteils (2) angeordnet ist,
wobei der Nutring hochdruckseitig eine radial äußere und eine radial innere Dichtlippe (6, 7) aufweist,
wobei das ruhende und das bewegliche Maschinenteil (2, 1) niederdruckseitig durch einen Dichtspalt (15) der Dichtspaltbreite B beabstandet sind,
wobei der Nutring (3) niederdruckseitig mit einer Anlagefläche (13) an einem radial orientierten Bereich (14) des profilierten Abschnitts anliegt,
wobei der Nutring (3) einen Innenradius und einen Außenradius aufweist,
wobei sowohl im drucklosen Zustand als auch im druckbeaufschlagten Zustand der Innenradius des Nutrings (3) im Bereich der Anlagefläche (13) größer ist als die Summe von R und B und wobei der Nutring (3) eine dem beweglichen Maschinenteil (1) zugewandte Innenfläche (24) aufweist, **dadurch gekennzeichnet, dass** die Innenfläche (24) mehrere Schmiertaschen aufweist, die als Ausnehmungen (25) in der Innenfläche (24) des Nutrings ausgebildet sind, wobei die Ausnehmungen jeweils axial von der Niederdruckseite N des Nutrings zur inneren Dichtlippe hin verlaufen, und dass die radiale Tiefe der einzelnen Ausnehmungen (25) von der Niederdruckseite N des Nutrings (3) zur inneren Dichtlippe (7) hin abnimmt.

2. Dichtungsanordnung nach Anspruch 1, **dadurch gekennzeichnet, dass** sich im drucklosen Zustand der Innenradius des Nutrings (3) von der Niederdruckseite N zur inneren Dichtlippe (7) hin in einem Bereich um die Anlagefläche (13) verkleinert, insbesondere stetig verkleinert.

3. Dichtungsanordnung nach Anspruch 2, **dadurch gekennzeichnet, dass** sich im drucklosen Zustand der Innenradius des Nutrings (3) von der Niederdruckseite N zur inneren Dichtlippe (7) hin in einem Bereich von der Anlagefläche (13) bis zur inneren Dichtlippe (7) stetig verkleinert, insbesondere konusförmig.

4. Dichtungsanordnung nach einem der vorhergehenden Ansprüche, **dadurch gekennzeichnet, dass** im drucklosen Zustand eine Außenkante (18) des Nutrings (3) in einem dem Dichtspalt (15) zugewandten Bereich konvex, insbesondere kreisbogenförmig ausgebildet ist.

5. Dichtungsanordnung nach einem der vorhergehenden Ansprüche, **dadurch gekennzeichnet, dass** der Nutring (3) eine dem beweglichen Maschinenteil (1) abgewandte Außenfläche (21) aufweist, die im drucklosen Zustand konkav gekrümmt ist.

6. Dichtungsanordnung nach einem der vorhergehenden Ansprüche, **dadurch gekennzeichnet, dass** sich im drucklosen Zustand der Außenradius des Nutrings (3) von der Niederdruckseite N zur äußeren Dichtlippe (6) hin in einem Bereich um die Anlagefläche (13) vergrößert, insbesondere stetig vergrößert.

7. Dichtungsanordnung nach einem der vorhergehenden Ansprüche, **dadurch gekennzeichnet, dass** der Nutring (3) eine dem beweglichen Maschinenteil (1) abgewandte Außenfläche (21) aufweist, und dass im drucklosen Zustand eine Außenkante (20) des Nutrings (3) im Übergangsbereich von Anlagefläche (13) und Außenfläche (21) konvex, insbesondere kreisbogenförmig, ausgebildet ist.

8. Dichtungsanordnung nach einem der vorhergehenden Ansprüche, **dadurch gekennzeichnet, dass** der Nutring (3) eine dem beweglichen Maschinenteil (1) zugewandte Innenfläche (24) aufweist, und dass die Innenfläche (24) Mikrostrukturen, insbesondere Kugelkalotten, aufweist.

## Claims

1. Sealing arrangement for hydraulic pistons or piston rods, comprising a U-cup (3) of a viscoplastic synthetic material, a stationary machine part (2) and a movable machine part (1) with an outer radius R, wherein the U-cup (3) is disposed as a contacting joint under radial prestress between the stationary machine part (2) and the movable machine part (1) in a profiled section of the stationary machine part (2), wherein the U-cup has a radially outer and a radially inner sealing lip (6, 7) on the high-pressure side, wherein the stationary and the movable machine parts (2, 1) are separated from each other on the low-pressure side by a sealing gap (15) of a sealing gap width B, wherein an abutment surface (13) of the U-cup (3) abuts a radially oriented region (14) of the profiled section on the low-pressure side, wherein the U-cup (3) has an inner radius and an outer radius, **characterized in that** both in the unpressurized state and in the pressurized state, the inner radius of the U-cup (3) in the region of the abutment surface (13) is larger than the sum of R and B and wherein the U-cup (3) comprises an inner surface (24) facing the movable machine part (1), **characterized in that** the inner surface (24) comprises several lubrication bore reliefs formed as recesses (25) in the inner surface (24) of the U-cup, wherein the recesses each extend in an axial direction from the low pressure side N of the U-cup towards the inner sealing lip, and the radial depth of the individual recesses (25) decreases from the low-pressure side N of the U-cup (3) towards the inner sealing lip (7).

2. Sealing arrangement according to claim 1, **characterized in that** in the unpressurized state, the inner radius of the U-cup (3) decreases, in particular continuously, from the low-pressure side N towards the inner sealing lip (7) in a region around the abutment surface (13).

3. Sealing arrangement according to claim 2, **characterized in that** in the unpressurized state, the inner radius of the U-cup (3) decreases continuously, in particular like a cone, from the low-pressure side N towards the inner sealing lip (7) in a region from the abutment surface (13) to the inner sealing lip (7).

4. Sealing arrangement according to any one of the preceding claims, **characterized in that** in the unpressurized state, an outer edge (18) of the U-cup (3) is formed convex, in particular like a circular arc, in a region facing the sealing gap (15).

5. Sealing arrangement according to any one of the preceding claims, **characterized in that** the U-cup (3) has an outer surface (21) facing away from the movable machine part (1), wherein the outer surface (21) is concavely curved in the unpressurized state.

6. Sealing arrangement according to any one of the preceding claims, **characterized in that** in the unpressurized state, the outer radius of the U-cup (3) increases, in particular continuously, from the low-pressure side N towards the outer sealing lip (6) in a region around the abutment surface (13).

7. Sealing arrangement according to any one of the preceding claims, **characterized in that** the U-cup (3) has an outer surface (21) facing away from the movable machine part (1), and that in the unpressurized state, an outer edge (20) of the U-cup (3) is formed convex, in particular like a circular arc, in the transition region between the abutment surface (13) and the outer surface (21).

8. Sealing arrangement according to any one of the preceding claims, **characterized in that** the U-cup (3) has an inner surface (24) facing the movable machine part (1), and the inner surface (24) has microstructures, in particular, spherical calottes.

## Revendications

1. Système d'étanchéité pour piston hydraulique ou tige de piston, comportant une bague rainurée (3) en matière synthétique viscoplastique, une pièce de moteur fixe (2) et une pièce de moteur mobile (1) avec un rayon intérieur (R),
la bague rainurée (3) étant agencée sous forme de joint d'étanchéité de contact entre la pièce de moteur fixe (2) et la pièce de moteur mobile (1) moyennant une précontrainte radiale dans une partie profilée de la pièce de moteur fixe (2),
la bague rainurée (3) comportant du côté haute pression une lèvre d'étanchéité radialement extérieure (6) et une lèvre d'étanchéité radialement intérieure (7),
la pièce de moteur fixe (2) et la pièce de moteur mobile (1) étant montées à distance l'une de l'autre du côté basse pression en laissant une fente d'étanchéité (15) ayant une largeur (B),
la bague rainurée (3) du côté basse pression étant en appui avec une face d'appui (13) sur une zone (14), orientée radialement, de la partie profilée,
la bague rainurée (3) ayant un rayon intérieur et un rayon extérieur, sachant que, à l'état non sollicité en pression, de même qu'à l'état sollicité en pression, le rayon intérieur de la bague rainurée (3) dans la zone de la face d'appui (13) est supérieur à la somme de (R) et (B),
et la bague rainurée (3) comportant une face intérieure (24) orientée vers la pièce de moteur mobile (1),
**caractérisé en ce que** la face intérieure (24) comporte plusieurs poches de lubrification, qui sont réalisées sous forme d'évidements (25) dans la face intérieure (24) de la bague rainurée (3), les évidements (25) s'étendant chacun dans le sens axial depuis le côté basse pression (N) de la bague rainurée (3) vers la lèvre d'étanchéité intérieure (7), et **en ce que** la profondeur radiale des différents évidements (25) diminue depuis le côté basse pression (N) de la bague rainurée (3) vers la lèvre d'étanchéité intérieure (7).

2. Système d'étanchéité selon la revendication 1, **caractérisé en ce que**, à l'état non sollicité en pression, le rayon intérieur de la bague rainurée (3), depuis le côté basse pression (N) vers la lèvre d'étanchéité intérieure (7), diminue, en particulier diminue en continu, dans une zone autour de la face d'appui (13).

3. Système d'étanchéité selon la revendication 2, **caractérisé en ce que**, à l'état non sollicité en pression, le rayon intérieur de la bague rainurée (3), depuis le côté basse pression (N) vers la lèvre d'étanchéité intérieure (7), diminue en continu, en particulier en forme de cône, dans une zone depuis la face d'appui (13) vers la lèvre d'étanchéité intérieure (7).

4. Système d'étanchéité selon l'une quelconque des revendications précédentes, **caractérisé en ce que**, à l'état non sollicité en pression, un bord extérieur (18) de la bague rainurée (3), dans une zone orientée vers la fente d'étanchéité (15), est réalisé avec une forme convexe, en particulier en forme d'arc de cercle.

5. Système d'étanchéité selon l'une quelconque des revendications précédentes, **caractérisé en ce que** la bague rainurée (3) comporte une face extérieure (21) opposée à la pièce de moteur mobile (1), laquelle possède une courbure concave à l'état non sollicité en pression.

6. Système d'étanchéité selon l'une quelconque des revendications précédentes, **caractérisé en ce que**, à l'état non sollicité en pression, le rayon extérieur de la bague rainurée (3), depuis le côté basse pression (N) vers la lèvre d'étanchéité extérieure (6), augmente, en particulier augmente en continu, dans une zone autour de la face d'appui (13).

7. Système d'étanchéité selon l'une quelconque des revendications précédentes, **caractérisé en ce que** la bague rainurée (3) comporte une face extérieure (21) opposée à la pièce de moteur mobile (1), et **en ce que**, à l'état non sollicité en pression, un bord extérieur (20) de la bague rainurée (3), dans une zone de transition entre la face d'appui (13) et la face extérieure (21), est réalisé avec une forme convexe, en particulier en forme d'arc de cercle.

8. Système d'étanchéité selon l'une quelconque des revendications précédentes, **caractérisé en ce que** la bague rainurée (3) comporte une face intérieure (24) orientée vers la pièce de moteur mobile (1), et **en ce que** la face intérieure (24) comporte des microstructures, en particulier des calottes sphériques.
